# EUROPEAN PATENT APPLICATION

(11) **EP 4 325 309 A1**
(43) Date of publication of application: **21.02.2024**
(21) Application number: 22190702.5
(22) Date of filing: 17.08.2022
(51) Int. Cl.: G05B 19/409, B25J 9/16, B25J 13/06, G05B 19/42

(54) **SYSTEM FOR CONTROLLING OPERATION OF AN AUTOMATION COMPONENT**

(71) Applicant: fruitcore robotics GmbH, 78467 Konstanz (DE)
(72) Inventor: FREY, Manuel, 78467 Konstanz (DE); RIEGGER, Jens, 78467 Konstanz (DE)
(74) Representative: Grünecker Patent- und Rechtsanwälte PartG mbB

(57) **Abstract**

The present invention relates to a system for controlling operation of at least one automation component, wherein the system comprises a mobile device configured for receiving a user's input and transmitting a control signal to a controller of the at least one automation component based on the user's input and means for detecting the presence of the mobile device at a location by detecting an electric charging operation or electric power consumption of the mobile device.

## Description

The present invention relates to the control of the operation of automation components of factories and automatic line operation of production lines and, in particular, the operation of automation components by means of mobile devices.

Industrial facilities comprise automation components, for example, robots, the operation of which has to be carefully controlled in order to guarantee high yield at desired qualities and to avoid accidents and production downtimes. An industrial robot includes a robot controller and a manipulator and is programmed to carry out some well-defined work by moving the manipulator along a predetermined operating path.

Conventionally, on-line or teach-in programming of a robot can be performed by means of a portable user operated client device commonly called Teach Pendant Unit (TPU). The TPU may include operator control means, for example, a joystick, a ball, or a set of buttons, for instructing the robot movement. The TPU may further comprise a visual display unit and an emergency stop button. The TPU may be used for monitoring the robot program, changing certain variables in the program, starting, stopping and editing the program or switching between different controller modes such as a manual mode in that movements of the robot are controlled by the TPU and an automatic mode in that movements of the robot are controlled in accordance with a control program running on a robot controller.

However, TPUs are relatively complex, expensive, and proprietary devices. Therefore, robot manufacturers and end-users more and more provide and use commercial-off-the-shelf mobile devices as, for example, smart phones and tablets communicating with robot controllers (see, for example, EP 2 958 711 A1 and EP 3 558 602 A1). Usage of a mobile device in a security sensitive operation and programming setting poses the problem of monitoring the location of the mobile device and, thereby, the user of the same. For example, it might be desired that the functionality of the mobile device is restricted if it is not present in an operation area pre-defined around an automation component such that it can be guaranteed that a user of the mobile device has intervisibility with the (manipulator of the) automation component.

In view of the above, it is a problem underlying the present invention to provide a convenient, flexible and secure control of the operation of an automation component at low costs.

The above-mentioned problem is solved by a system for controlling operation of at least one automation component, wherein the system comprises a mobile device (for example, a tablet, notebook, PDA, or smartphone) configured for receiving a user's input and transmitting a control signal to a controller of (provided for) the at least one automation component based on the user's input. Further, the system comprises means for detecting the presence of the mobile device at a location by detecting an electric charging operation or electric power consumption of the mobile device. For example, the location lies within an operation area pre-defined around the at least one automation component.

Controlling the operation of the at least one automation component may comprise configuring/programming the operation of the at least one automation component. The controller of the at least one automation component may be comprised by the system and it is not necessarily exclusively configured for control of and data transmission related to that particular automation component (see also description below). The at least one automation component may be or comprise a robot or any automatized tool and it may be comprised by the system. The at least one automation component may be some or all of the automation components of a facility or production line.

A user can control and program operation of the at least one automation component by means of the mobile device that may also be configured for monitoring/displaying operation of the at least one automation component. The mobile device may also be configured to send signals to other components of a factory or to a production line. The mobile device does need and consume electrical power. According to the invention, this basic fact is used for the detection of the mobile device. When the mobile device is charging or consuming electrical power these processes are detected by the means dedicated for that kind of detection. Thereby, the presence of the mobile device at a location can very easily and reliably be detected.

Many off-the-shelf mobile devices are configured for inductive electric charging. It can be taken advantage of this fact by configuring the means for detecting the presence of the mobile device for detecting an inductive electric charging of the mobile device.

Control of the operation of the at least one automation component can be further facilitated by providing a control device different from the mobile device comprised by the inventive system and being configured for transmitting a control signal to the controller of the at least one automation component wherein the control device may have a reduced functionality as compared to the mobile device. The control device may either be a mobile control device or a stationary control panel arranged in some proximity to the at least one automation component. All security relevant functions and functions necessary for operation of the at least one automation component may be implemented in the control device but it may not be configured for any programming/teaching/running software and, thus, may have a reduced functionality as compared to the mobile device. Particularly, the control device may comprise at least one switch allowing a user's input, wherein the at least one switch comprises at least one of an emergency switch, enabling switch, start switch, stop switch and a programmable switch.

Operation of the at least one automation component in an automatic mode is possible without usage of the mobile device. Operation functions may be distributed over or shared by the mobile device and the control device in accordance with the user's needs and preferences and, thus, flexibility of the operation is enhanced by the provision of the control device and overall safety of the operation of the at least one automation component is increased.

According to an embodiment, the control device comprises the means for detecting the presence of the mobile device. No additional component of the system is needed for the detection of the presence of the mobile device according to this embodiment. For example, the control device may comprise means for charging the mobile device. When the mobile device is charged by the control device the control device can easily and directly detect the charging process and, thereby, the presence of the mobile device. Particularly, the control device may comprise a receptacle for accommodating and charging the mobile device. When the mobile device is inserted into the receptacle of the control device programming and/or displaying and/or teaching and/or controlling functions implemented in the mobile device may be unlocked.

According to an embodiment, the control device is configured for transmitting a control signal to the controller of the at least one automation component indicating the detected presence of the mobile device at the location. For example, the control device detects the presence of the mobile device and in response to the detection of the presence of the mobile device transmits a control signal to the controller of the at least one automation component that instructs the controller to receive and execute instructions send by the mobile device. The controller of the at least one automation component may be configured to execute instructions send by the mobile device only if it has received the control signal from the control device.

According to another example, the mobile device may only be allowed to transmit a control signal to the at least one automation component if it is authorized to do so by the control device and the authorization may only be given if the presence of the mobile device at the location is detected, for example, by the control device itself. In general, the control device may be configured for transmitting a control signal to the controller of the at least one automation component based on which operation of the mobile device is controlled. Control of the operation of the mobile device may comprise allowing or not allowing at least one of a) displaying of operation data related to the at least one automation component (4) by the mobile device, b) operating the at least one automation component by the mobile device, and c) programming of operation of the at least one automation component by the mobile device.

The controller of the at least one automation component may be configured for streaming data to the mobile device and/or control device. The controller of the at least one automation component may be configured for transmitting a control signal to the mobile device based on which operation of the mobile device is controlled. Overall safety of the operation of the at least one automation component may be increased by kinds of the above-described control of the operation of the mobile device by the control device and/or controller of the at least one automation component.

As already mentioned above, as compared to the controller the mobile device may provide an enhanced functionality with respect to software applications. The mobile device may comprise a processing unit configured for running a software program, a user interface and a display and it may be configured for at least one of programming operation of the at least one automation component and displaying data representing information on operation of the at least one automation component, in particular, received from the controller of the at least one automation component.

In all of the above-described embodiments the control device may comprise a communication interface configured for transmitting the control signal to the controller of the at least one automation component wirelessly or by wire. The mobile device may comprise a communication interface configured for transmitting the control signal to the controller of the at least one automation component wirelessly. Particularly, the communication interface of the control device may be configured for transmitting a control signal to either a single controller provided for more than one of the at least one automation components or individual controllers provided for more than one of the at least one automation components. Particularly, the communication interface of the mobile device may be configured for transmitting a control signal to either a single controller provided for more than one of the at least one automation components or individual controllers provided for more than one of the at least one automation components. For example, the system comprises more than one automation components, wherein each of the more than one automation components comprises a controller and each of the controllers is connected with the mobile device and a respective controller device.

The means for detecting the presence of the mobile device may be configured for detecting the presence of the mobile device, additionally, by means of at least one of Near Field Communication (NFC), Wireless Local Area Network (WLAN), Wireless Personal Area Network (WPAN), and Ultra-Wideband (UWB) technologies. The means for detecting the presence of the mobile device may comprise a receiver for receiving data transmitted by an acceleration sensor comprised by the mobile device. Redundant detection of the presence of the mobile device may increase the overall safety of the operation of the at least one automation component.

Further, it is provided a factory comprising any of the above-described embodiments of the inventive system and a factory comprising any of the above-described embodiments of the inventive system and the at least one automation component.

Furthermore, in order to solve the above-mentioned problem, it is provided a method of locating a mobile device configured for receiving a user's input and transmitting a control signal to a controller of at least one automation component of a factory based on the user's input, comprising the step of detecting the presence of the mobile device at a location within an operation area pre-defined around the at least one automation component by detecting an electric charging operation or electric power consumption of the mobile device. Detecting of the presence of the mobile device at the location may comprise detecting an inductive electric charging of the mobile device.

Furthermore, in order to solve the above-mentioned problem, it is provided use of a detector for detecting an electric charging operation or electric power consumption operation of a device for detecting the presence of a mobile device being comprised by a system for controlling operation of at least one automation component of a plant. The system and the components thereof may have some or all of the specifications detailed in the context of the description of the embodiments above.

Additional features and advantages of the present invention will be described with reference to the accompanying figures that illustrate embodiments of the claimed invention.
Figure 1 illustrates a system for controlling operation of an automation component according to an embodiment of the present invention.
Figure 2 illustrates a system for controlling operation of a plurality of automation components according to an embodiment of the present invention.
Figure 3 illustrates a system for controlling operation of a plurality of automation components according to another embodiment of the present invention.

Herein, it is provided a system for controlling operation of one or more automation components (for example, one or more robots) of a factory, wherein the system comprises a mobile device configured for receiving a user's input and transmitting a control signal to a controller of at least one automation component (and possibly to any other component of the factory) based on the user's input and means for detecting the presence of the mobile device at a location. The detection of the presence of the mobile device is achieved by detecting an electric charging operation or electric power consumption of the mobile device. A control device configured for communicating with the controller of at least one automation component may comprise the means for detecting the presence of the mobile device.

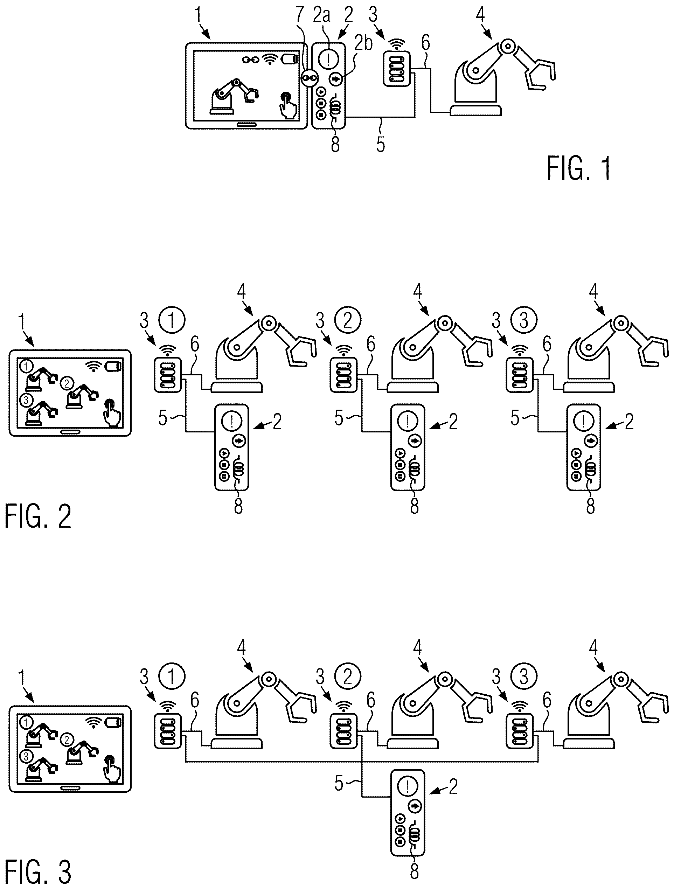

An embodiment of the system for controlling operation of at least one automation components is shown in Figure 1. The system comprises a tablet computer 1 comprising a touch screen allowing a user's input and display of operation data. Alternatively, a notebook, PDA, smartphone, etc. can, for example, be used as a mobile device. The system further comprises a control device 2. The control device 2 may be a mobile control device or a stationary control panel. The tablet 1 and the control device 2 can be considered as two components of an operation and control apparatus and are used for communication with a robot controller 3 of a robot 4 and any other component of a factory as it is considered suitable.

The tablet 1 can send control signals to the controller 3 and display operation data streamed by the controller 3. The tablet 1 and the control device 2 can be operated independently from each other by a user. The tablet 1 comprises a memory and a processing unit configured for programming/teaching/running software. The control device 2 does not comprise such kind of processing unit. The control device 2 comprises switches allowing a user's input, for example, an emergency switch 2a, an enabling switch, start switch, stop switch and a programmable switch 2b. The control device 2 may be enabled to perform all security relevant functions and functions necessary for operation of the robot 4 such that the tablet 2 may only be needed for programming/teaching and in cases of operation failure.

In the example shown in Figure 1, the control device 2 is connected with the controller 3 by a wired connection 5 and the controller 3 is connected with the robot 4 by a wired connection 6. At least one of the wired connection 5 and wired connection 6 may be replaced by a wireless connection if considered suitable. The tablet 1 is connected with the control device 2 by a connection 7 (which, in principle, can be a wired and/or wireless connection and may comprise a data connection and an electrical connection). The tablet 1 communicates with the controller 3 of the robot 4 wirelessly.

The robot 4 can operate in an automatic mode in that movements of the robot are controlled in accordance with a control program running on the robot controller 3 or in a manual mode in that movements of the robot 4 are controlled by the tablet 1. Operation in the automatic mode may be independent from (signals transmitted by) the tablet 1 and it may be at least partially programmed by means of the tablet 1.

In the security sensitive environment shown in Figure 1 presence of the tablet 1 within some operation area of the robot 4 has to be detected. For example, at least some of the operations/functionalities of the tablet 1 may only be unlocked if presence of the tablet 1 is detected at some location within the operation area.

In the example shown in Figure 1, the control device 2 comprises means 8 for detecting the presence of the tablet 1 (and, thus, the user of the same) at a location by detecting an electric charging operation or electric power consumption of the tablet 1 by means of the connection 7. Detecting the presence of the tablet 1 at a location by detecting an electric charging operation or electric power consumption of the tablet 1 can be easily and reliably realized at low costs. The connection 7 may comprise a receptacle for accommodating the tablet 1. For example, the control device 2 is configured for detecting a current flowing in electronic components of the tablet 1 and/or it is configured for charging a rechargeable battery of the tablet 1 and, thus, can detect the charging operation. The rechargeable battery of the tablet 1 may be charged by an inductive charging means comprised by the control device 2. It is noted that according to alternative embodiments, the means 8 for detecting the presence of the tablet 1 are provided separate from the control device 2. For example, the means 8 for detecting the presence of the tablet 1 may be comprised by the controller 3 or may be realized in form of a discrete physical entity.

Moreover, the means 8 for detecting the presence of the tablet 1 may additionally be configured for detecting the presence of the tablet 1 by means of at least one of NFC, WLAN (WLAN data transfer and/or triangulation), WPAN, and UWB technologies and data provided by an acceleration sensor comprised by the tablet 1. Such redundant detection of the presence of the tablet 1 may increase the overall safety of the operation of the robot 4.

The control device 2 may be configured to unlock security sensitive functions of the tablet 1 upon detection of the presence of the tablet 1. Displaying operation data, operating the robot 4, and programming the controller 3 may be allowed by the control device 2 and/or the controller 3 based on the detection of the presence of the tablet 1 and not allowed if presence of the tablet 1 is not detected. Further, the control device 2 may be configured to allow the controller 3 to receive and execute instructions transmitted by the tablet 1 to the controller 3 upon detection of the presence of the tablet 1.

Figures 2 and 3 show embodiments of a system for controlling operation of a plurality of automation components. Similar to the configuration shown in Figure 1 each of the configurations shown in Figures 2 and 3 comprises a tablet 1 with the same specifications as described above with reference to Figure 1. Three sub-systems as indicated by the encircled number 1, 2 and 3 are provided operation of which can be controlled, programmed and displayed by the tablet 1.

According to the embodiment shown in Figure 2, each of the sub-systems comprises a control device 2, a robot controller 3 and a robot 4. In each of the sub-systems the control device 2 is connected with the controller 3 by a wired connection 5 and the controller 3 is connected with the robot 4 by a wired connection 6. Each of the control devices 2 and controllers 3 can have the same specifications as described above with reference to Figure 1. Particularly, each of the control devices 2 comprises means 8 for detecting the presence of the tablet 1 at a location by detecting an electric charging operation or electric power consumption of the tablet 1. The means 8 for detecting the presence of the tablet 1 may have the same specifications as described above with reference to Figure 1. Alternatively, only one of the control devices 2 comprises the means 8 for detecting the presence of the tablet 1.

According to the embodiment shown in Figure 3, only one control device 2 comprising the means 8 for detecting the presence of the tablet 1 is provided for all of the robots 4 and is, accordingly, connected with each of the robot controllers 3 by wired connections 5. The robot controllers 3 are connected with the respective robots 4 by wired connections 6. In the configuration shown in Figure 3 also the tablet 1, the control device 2, each of the controllers 3, and the means 8 for detecting the presence of the tablet 1 may, respectively, have the same specifications as described above with reference to Figure 1. The restriction to only one single control device 2 reduces costs and may enhance the user convenience.

As illustrated in Figures 2 and 3 a plurality of automation components can be operated/controlled/programmed by means of one single mobile device only which communicates with one or more control devices and with robot controllers. High flexibility with respect to user experience and user interface designs is, thereby, advantageously provided. Operation, control and programming of each automation component and other operable and/or programmable component of a factory, production line, etc. is made available based on programs/apps running on the mobile device. Further, operations can be simulated for digital representations of physical (automation) components by the mobile device or another device that provides the mobile device with simulation results for further analysis and/or display.

All previously discussed embodiments are not intended as limitations but serve as examples illustrating features and advantages of the invention. It is to be understood that some or all of the above-described features can also be combined in different ways.

## Claims

1. System for controlling operation of at least one automation component (4), comprising a mobile device (1) configured for receiving a user's input and transmitting a control signal to a controller (3) of the at least one automation component (4) based on the user's input; and means (8) for detecting the presence of the mobile device (1) at a location by detecting an electric charging operation or electric power consumption of the mobile device (1).

2. The system according to claim 1, wherein the means (8) for detecting the presence of the mobile device (1) are configured for detecting an inductive electric charging of the mobile device (1).

3. The system according to claim 1 or 2, further comprising a control device (2) configured for transmitting a control signal to the controller (3) of the at least one automation component (4), wherein the control device (2), in particular, has a reduced functionality as compared to the mobile device (1).

4. The system according to claim 3, wherein the control device (2) comprises the means (8) for detecting the presence of the mobile device (1).

5. The system according to claim 3 or 4, wherein the control device (2) comprises means (8) for charging the mobile device (1).

6. The system according to one of the claims 3 to 5, wherein the control device (2) comprises a receptacle for accommodating the mobile device (1).

7. The system according to one of the claims 3 to 6, wherein the control device (2) comprises at least one switch (2a, 2b) allowing a user's input, wherein the at least one switch comprises at least one of an emergency switch (2a), enabling switch, start switch, stop switch and a programmable switch (2b).

8. The system according to one of the claims 3 to 7, wherein the control device (2) is a mobile control device or a stationary control panel.

9. The system according to one of the claims 3 to 8, wherein the control device (2) is configured for transmitting a control signal to the controller (3) of the at least one automation component (4) indicating detected presence of the mobile device (1) at the location.

10. The system according to one of the claims 3 to 9, wherein the control device (2) is configured for transmitting a control signal to the controller (3) of the at least one automation component (4) based on which operation of the mobile device (1) is controlled.

11. The system according to claim 10, wherein control of the operation of the mobile device (1) comprises allowing or not allowing at least one of
a) displaying of operation data related to the at least one automation component (4) by the mobile device (1);
b) operating the at least one automation component (4) by the mobile device (1); and
c) programming of operation of the at least one automation component (4) by the mobile device (1).

12. The system according to claim 10 or 11, further comprising the controller (3) of the at least one automation component (4) and wherein the controller (3) of the at least one automation component (4) is configured for transmitting a control signal to the mobile device (1) based on which operation of the mobile device (1) is controlled.

13. The system according to one of the preceding claims, wherein the mobile device (1) comprises
a processing unit configured for running a software program;
a user interface; and
a display;
and wherein the mobile device (1) is configured for at least one of
a) programming operation of the at least one automation component (4); and
b) displaying data representing information on operation of the at least one automation component (4), in particular, received from the controller (3) of the at least one automation component (4).

14. The system according to one of the preceding claims, wherein the location lies within an operation area pre-defined around the at least one automation component (4).

15. Use of a detector for detecting an electric charging operation or electric power consumption operation of a device for detecting the presence of a mobile device (1) being comprised by a system for controlling operation of at least one automation component (4) of a factory.
